# EUROPEAN PATENT APPLICATION

(11) **EP 2 393 295 A1**
(43) Date of publication of application: **07.12.2011**
(21) Application number: 10165086.9
(22) Date of filing: 07.06.2010
(51) Int. Cl.: H04N 7/18, G06K 9/00, G08G 1/01, G08G 1/04, G08G 1/052, B60K 31/00, B60R 1/00

(54) **Method and device for identifying driving situations**

(71) Applicant: Harman Becker Automotive Systems GmbH, 76307 Karlsbad (DE)
(72) Inventor: Mauderer, Hans-Peter, 76571, Gaggenau (DE); Huebner, Klaus, 75181, Pforzheim (DE); Stiegler, Andreas, 76337, Waldbronn (DE)
(74) Representative: Bertsch, Florian Oliver

(57) **Abstract**

A method of identifying a driving situation involving a vehicle (150) which is provided with an image acquisition unit (110), the method comprising the steps of: receiving, from said image acquisition unit (110), an object list comprising object data, the object data including at least a plurality of objects detected by means of said image acquisition unit (110) in image data that is acquired of the surroundings of the vehicle (150) by said image acquisition unit (110), and distances of the detected objects to the vehicle (150) determined by said image acquisition unit (110) from the acquired image data, at least temporarily storing the object list in a memory (102) arranged in said vehicle (150); and analyzing the object list so as to identify one or more predetermined driving situations from the object data comprised in the object list.

## Description

### Technical Field

The invention relates to a method of identifying a driving situation involving a vehicle, said vehicle being provided with an image acquisition unit, and further to a device for performing such a method. The invention further relates to a method of providing trafficability information for road sections.

### Background

The number of registered vehicles and accordingly the traffic density on the roads is steadily increasing. Authorities handle the increased traffic densities by increasing the number of and introducing new traffic restrictions and regulations. Nevertheless, the heavier traffic has lead to an increasing number of accidents and furthermore, the compliance with the traffic regulations has become more difficult to monitor.

The adherence to the traffic regulations is generally only controlled on a random basis, such as by a mobile radar unit monitoring vehicle velocity using the Doppler effect, mobile laser guns using the LIDAR technique, red light cameras, bus lane cameras and the like. Using these systems, a particular driver is only controlled by chance, and by making use of suitable information sources, such as radio or modern navigation devices, drivers can avoid fixed and mobile camera systems. If an accident occurs, it is very difficult to reconstruct the corresponding driving situation and whether the drivers of the vehicles involved have obeyed the prevailing traffic regulations.

Driver assistance systems are known in the art which for example assist the driver in holding a predefined distance to a preceding vehicle, and if the distance becomes too small, inform the driver or take an action such as slowing down the vehicle. Yet such systems are not capable of monitoring traffic violations committed by the driver or enable the reconstruction of an accident situation.

A further problem arises from the fact that traffic regulations frequently change, for example when a road section is subjected to road works, when speed limits are changed or when new no-overtaking zones are established or existing zones removed. If a route is calculated by a conventional navigation system from a given starting point to a destination, such changes to traffic regulations are generally not considered. This is particularly true for cases in which current traffic information services, such as the traffic message channel (TMC), are unavailable or for changes to traffic regulations that are not comprised in the information transmitted over such an information channel. If road works are performed on a highway, the speed limit may be reduced to for example 60 km/h, yet the route planner will still calculate a route considering an average velocity of 130 km/h. A conventional navigation device will accordingly not provide the fastest route to the destination, as it will not consider the fact that it will twice as long for passing the corresponding road section.

Accordingly, there is a need to monitor whether traffic regulations are observed by drivers and to enable the reconstruction of a driving situation in case of an accident. There is furthermore the need to improve the route determination in a navigation system.

### Summary

These needs are met by the features of the independent claims. In the dependent claims preferred embodiments of the invention are described.

According to a first aspect of the invention, a method of identifying a driving situation involving a vehicle which is provided with an image acquisition unit is provided. In the method, an object list comprising object data is received from the image acquisition unit. The object data includes at least a plurality of objects detected by means of the image acquisition unit in image data that is acquired of the surroundings of the vehicle by the image acquisition unit. The object data further comprises distances of the detected objects to the vehicle determined by the image acquisition unit for the acquired image data. The object list is at least temporarily stored in a memory arranged in the vehicle. The object list is further analyzed so as to identify one or more predetermined driving situations from the data comprised in the object list.

The identification of the driving situation can include the type of the situation (e.g. an accident, a traffic violation such as a violation of a speed limit, ...) and the circumstances of the situation (e.g. vehicle velocity, vehicle position, ...). The object list can be received continuously from the image acquisition unit, and the analysis can be performed automatically while the vehicle is in motion. Accordingly, it becomes possible to both identify traffic violations committed while the vehicle is in motion, as well as to reconstruct a particular driving situation such as an accident after the vehicle has stopped. The object list may comprise the type of the object and its distance relative to the vehicle, as well as other information such as an object motion relative to the vehicle which may also be deducted from a time series of the positions of the object in the list. By means of this information, a very detailed reconstruction of a particular traffic situation, including the positions and velocities of other vehicles involved, becomes possible. Storing of the object list further requires less memory than storing of image data, and accordingly, object data for a considerable period of time can be archived in the vehicle memory. The method thus enables the analysis of the driving behaviour of the vehicle driver and provides knowledge about the traffic situation in case of an accident.

According to an embodiment, the method further comprises the steps of acquiring telemetry data from the vehicle while driving and at least temporarily storing the acquired telemetry data in the memory in such a way that it is temporarily related to the object data stored in the object list, the telemetry data being considered in the identification of the driving situation. Telemetry data may for example at least comprise one of vehicle velocity, wheel sensor data, steering angle, inertial sensor data, position data and the like. Making use of such additional data, identification of the driving situation can be facilitated and the precision of the identification can be improved.

The object data may be recorded in the object list in association with a time stamp. A corresponding time stamp may then be provided for the acquired telemetry data, so that both types of information can be related with each other.

The image acquisition unit may comprise a 3D camera, and the method may further comprise the steps of acquiring a stream of 2D images with a second image acquisition unit and at least temporarily storing the 2D images in the memory. The stored 2D images can then be considered in the identification of the driving situation. This is particularly advantageous for the reconstruction of a driving situation after an accident. The 2D images may also be stored in association with a time stamp so as to relate them to the object data in the object list.

The image data acquired by the image acquisition unit, e.g. by the 3D camera, may be discarded after its processing for object detection. As a result, only a small amount of memory is necessary to track the driving behaviour over a longer time period by storing the object list but not the image data. Corresponding 2D images can be stored for a predetermined period of time, which can be as short as 15,10 or even 5 minutes, so that they also only require a limited amount of storage space in the memory. Such a time period is generally long enough to enable the reconstruction of the driving situation after an accident.

The temporary storing of the object list may be performed such that object data that is older than a predetermined time period is continuously being discarded from the object list while the vehicle is in motion. The time period can again be shorter than 15, 10 or even 5 minutes, as this is generally enough to reconstruct the driving situation preceding an accident. As other driving situations, such as a violation of traffic regulations, can be identified automatically while the vehicle is in motion, the object data does no longer need to be available for this purpose after the driving situation was identified. Object data that is continuously being received from the image acquisition unit can thus be kept for said predetermined time period only, resulting in a conservation of storage space.

The object list may for example comprise at least other vehicles, traffic signs, and/or pavement markings as objects, which are detectable by the image acquisition unit.

The analyzing of the object list may for example comprise comparing information content derived from an object of the list, such as the speed limit on a traffic sign, to telemetry data of the vehicle, such as the vehicle velocity. Analyzing of the object list may additionally or alternatively comprise the determining of a type of an object and a relative movement of the object and the vehicle in order to identify the driving situation. The crossing of a solid line or a close approach to another vehicle or object may thus be detected.

In general, the analysis may consider telemetry data, such as position information or vehicle velocity, and/or information content derived from an object of the list, such as from a traffic sign, from a pavement marking or the like.

As an example, the analyzing of the object list can be automatically performed in such a way that at least one or a combination of the following driving situations can be identified: the vehicle exceeding a speed limit set on a particular road section; the vehicle crossing a solid line separating two lanes of a road section; the vehicle passing another vehicle in a no-passing area; the vehicle falling short of a minimum distance required to be kept to a vehicle travelling ahead; the vehicle entering a one-way-street in the wrong direction; and an accident of the vehicle or another vehicle. The identification of these driving situations can enable a detailed evaluation of the driving behaviour.

According to a further embodiment, the method further comprises the recording of the identified driving situations in the memory. Automatically determining and logging the driving situations enables the tracking of the driving behaviour over longer time periods. As after storing the identified driving situation, the corresponding objects can be discarded, the requirements on storage space in the memory are comparatively low.

The recorded driving situation may be provided for read-out, with the driving situation data forming a basis for determining the driving behaviour of the driver of the vehicle. As an example, the authorities can be provided with a reader that can read out the driving situation data, and can accordingly determine the number of traffic violations. A continuous monitoring of the driving behaviour thus becomes possible. This can be particularly beneficial for monitoring persons having a driving license only conditionally. Other applications include the monitoring of professional drivers of a vehicle fleet and the like. Another possibility is the automatic determination of statistics for the recorded driving situation and providing the statistics for read-out. Further, it is conceivable to provide the object list and/or associated telemetry data for read-out. As the driving situations can be reconstructed from the object list and the telemetry data, a tachograph can be realized.

According to an embodiment, the method is continuously performed while the vehicle is driving, said analyzing of the object list being performed automatically for the majority of driving situations, preferably for all driving situations, by means of a data processing unit arranged in the vehicle. With a fully automated analysis inside the vehicle, the object list is no longer required, and objects can be removed from the list after being analyzed for the predetermined driving situation by the data processing unit.

In another embodiment, the driving situation comprises an accident, and the analyzing of the object list comprises an analyzing being performed outside the vehicle, said analysis comprises the retrieving of the object list from the memory and the reconstruction of the vehicle position relative to one or more objects of the object list in order to reconstruct the accident. The recording and discarding of the recorded data can be stopped when the vehicle is stopped after the accident, and a detailed reconstruction of the traffic scene becomes possible from the retrieved data. This can take the telemetry data and 2D images mentioned above into account. The reconstruction can be automatically performed by a computing system provided with the retrieved object list and other data to be used for the reconstruction.

It should be clear that the features and steps mentioned above can be combined. As an example, the method may both include the automatic determination and the storing of driving situations on-board, and the providing of the object list and the 2D images for read-out for an off-board analysis thereof.

According to a further aspect of the present invention a device for identifying driving situations involving a vehicle is provided, the device being adapted to be mounted inside a vehicle comprising an image acquisition unit. The device comprises an interface towards the image acquisition unit, the device being configured to receive an object list comprising object data on said interface. The object data includes at least a plurality of objects detected by means of the image acquisition unit in image data that is acquired of the surroundings of the vehicle by the image acquisition unit, and distances of the detected objects to the vehicle determined by the image acquisition unit from the acquired image data. The device further comprises a memory configured to store the object list at least temporarily and a data processing unit configured to process the object list received on the interface and stored in the memory by analyzing the object list so as to identify one or more predetermined driving situations from the data comprised in the object list. By means of the inventive device, similar advantages as those outlined above with respect to the inventive method can be achieved.

According to an embodiment of the device, the device is configured so as to perform any of the methods mentioned above. The device may for example comprise an interface to a telemetry unit of the vehicle to receive telemetry data. The processing unit may then be configured to consider the telemetry data in the determination of the driving situations. The device may further itself comprise the image acquisition unit. The image acquisition unit may comprise a 3D camera for acquiring the image data, such as a photonic mixer device (PMD). The device may further comprise a second image acquisition unit comprising a two-dimensional (2D) camera for acquiring 2D images, and the processing unit may be configured to consider the acquired 2D images in the determination of the driving situation.

According to an embodiment, the image acquisition unit is part of a driver assistance system provided in the vehicle.

The device according to any of these embodiments may be used in any of the methods described above.

According to a further aspect of the invention, a method of providing trafficability information for road sections is provided. In the method an object list comprising a plurality of objects detected by means of an image acquisition unit mounted to a vehicle is provided. The image acquisition unit is adapted to process image data acquired while the vehicle is in motion so as to detect the object in the image data, the object in the object list comprising at least other vehicles, traffic signs and pavement markings. The method further comprises providing position information that relates the acquired image data and accordingly the object detected therein to the position at which the image data was acquired, automatically extracting objects relating to traffic restrictions from the object list and identifying the traffic restrictions indicated by the extracted objects and their respective positions. The identified traffic restrictions together with the respective position information are then provided to be included into a navigation database so as to enable the consideration of the traffic restriction in a subsequent route determination.

As the object list can be continuously acquired while the vehicle is driving, the information on traffic restrictions in the navigation database can be kept up to date. If the object list compiled by the image acquisition unit comprises for example information relating to road works, this information can be incorporated into the navigation database, and can be considered for routing.

According to an embodiment, the objects relating to traffic restrictions comprise at least traffic signs. The method may further comprise the step of including the traffic restrictions together with the respective position information into the navigation database. Further, the method may include the determining of a route from a starting point to a destination under consideration of the included traffic restrictions.

The object list can be provided by any of the methods mentioned above. It may for example be received from an image acquisition unit and stored in a memory of the vehicle, and may then be retrieved from this memory for identifying the traffic restrictions. It is also conceivable to perform the method automatically inside a vehicle, so that a navigation database internal to the vehicle can be updated, or the identified traffic restrictions can be retrieved on an interface provided in the vehicle. The method may be performed on an embodiment of the device described above.

According to a further aspect of the invention, a computer program product is provided that can be loaded into the internal memory of a computing device, the product comprising software code portions for performing any of the methods described above when the product is executed. The computer program product can be provided on an electronically readable data carrier. The invention further provides an electronically readable data carrier with stored electronically readable control information configured such that when using the data carrier in a computing device, the control information performs any of the methods mentioned above.

It is to be understood that the features mentioned above and those yet to be explained below can not only be used in the respective combination indicated, but also in other combinations or in isolation, without leaving the scope of the present invention.

### Brief Description of the Drawings

The foregoing and other features and advantages of the invention will become further apparent from the following detailed description of illustrative embodiments when read in conjunction with the accompanying drawings.
Fig. 1 is a schematic block diagram of a vehicle comprising a device for identifying driving situations according to an embodiment of the present invention,
Fig. 2 is a flow diagram of a method of identifying a driving situation according to an embodiment of the invention.
Fig. 3 is a flow diagram illustrating a method according a further embodiment of the invention.
Fig. 4 is a flow diagram illustrating a method according to a further embodiment of the invention.

It is to be understood that the following description of embodiments is given only for the purpose of illustration and is not to be taken in a limiting sense. It should be noted that the drawings are to be regarded as being schematic representations only. The partitioning of embodiments in functional blocks or units shown in the drawings is not to be construed as indicating that these units necessarily are implemented as physically separate units, but functional blocks or units shown or described may be implemented as separate units, circuits, chips or circuit elements, but one or more functional blocks or units may as well be implemented in a common circuit, chip, circuit element or unit.

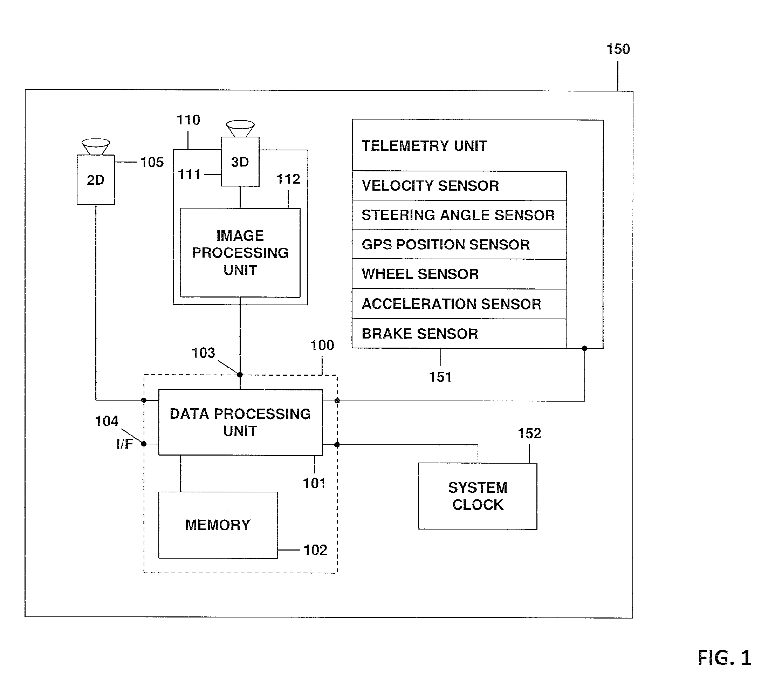

The schematic block diagram of Fig. 1 illustrates a vehicle 150 comprising a device 100 for identifying driving situations according to an embodiment of the present invention. Vehicle 150 further comprises an image acquisition unit 110. The image acquisition unit 110 may be part of a driver assistance system (not shown) of vehicle 150. As such, the data and in particular the object list created by image acquisition unit 110 may not only be used by device 100 but also by said driver assistance system. This has the advantage that no additional image acquisition unit needs to be provided.

Image acquisition unit 110 includes a three dimensional (3D) camera 111 interfacing an image processing unit 112. 3D camera 111 can be a camera working according to the time of flight principle and delivering, besides a conventional intensity image, information on the distances of objects within the camera's field of view. For the purpose of range finding, 3D camera 111may use a modulated light source, e.g. emitting light in the infrared or near infrared, with a modulation frequency in the megahertz regime. The modulated light is reflected by objects within the fields of view and detected by a sensor of the 3D camera, such as a CMOS-sensor. From a phase shift between the modulation signal supplied as a reference signal and the modulation of the detected light, a signal proportional to the phase shift and thus to the distance travelled by the light is generated. The distance of the camera to the objects can thus be determined with a spatial resolution corresponding to the resolution of the CMOS-sensor. 3D camera 111 may for example include a photonic mixer device (PMD)-sensor.

Image processing unit 112 receives from 3D camera 111 the intensity image and the corresponding distance map. Image processing unit 112 identifies objects within the received data and their respective distances to vehicle 150. 3D camera 111 images the surroundings of vehicle 150. As the vehicle is travelling along road sections, 3D camera 111 captures image data at a certain frame rate, for example in a range of 1 to 30 frames per second or even lower. An image frame of the acquired image data may thus comprise objects commonly encountered in a road scene, such as other vehicles, pavement markings, road signs, pedestrians, trees and the like. Image processing unit 112 is now adapted to process the image frames so as to recognize the objects imaged therein. This may be performed by a pattern recognition method or any other method for detecting objects in image data known to the skilled person.

Image processing unit 112 compiles an object list comprising the identified objects. The list may for example comprise an object number and information on the position of the object within the image frame. It may further comprise information on the type of the object (e.g. vehicle, person, line, traffic sign, type of item, ...) and the distance of the object to the vehicle. The conversion of the distance signal generated by camera 111into a distance value can be performed by the camera itself, or can be performed by image processing unit 112.

The object list can further include a time stamp for each object, or the objects of a frame may be grouped together and a time stamp is provided for the whole group corresponding to the frame. For this purpose, the image acquisition unit 110 can interface the system clock 152 of the vehicle (interface not shown) or may itself comprise a clock for generating the time stamp. Image processing unit 112 can identify objects in every frame delivered by 3D camera 111, or the object recognition may only be performed for predefined frames, skipping intermediate frames. The object list is thus continuously being generated while vehicle 150 is driving and being populated with recognized objects.

Device 100 comprises an interface 103 on which it receives the object list from image acquisition unit 110. Image acquisition unit 110 can supply the object data framewise to device 100 or it may supply an object list summarizing the object data for a number of frames.

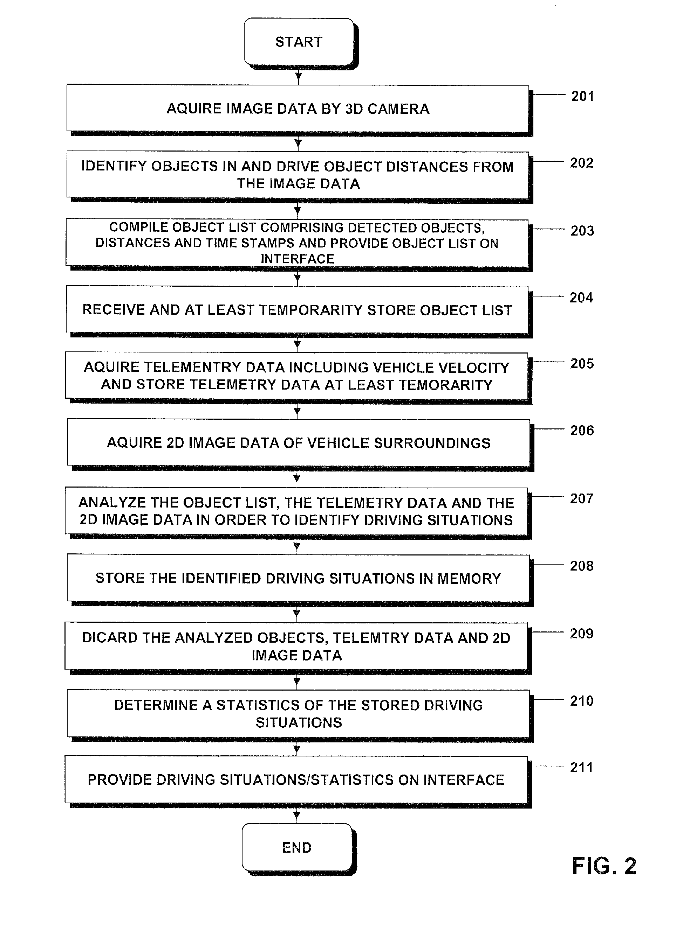

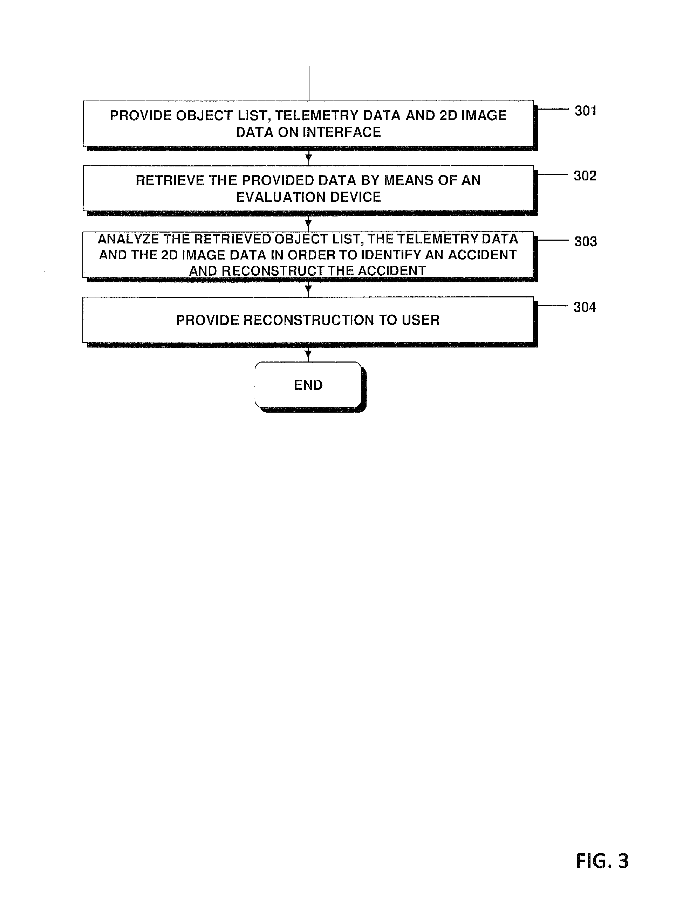

Device 100 can be implemented as a computing unit and comprises a data processing unit 101 and a memory 102. Data processing unit 101 controls the operation of device 100 and can be implemented as a single or as multiple microprocessors, as a digital signal processor or an application specific integrated circuit. The data processing unit 101 receives the object list on interface 103 and stores the object list at least temporarily in memory 102. Memory 102 can comprise all types of memory, such as random access memory, a flash memory or a hard drive. Depending on the configuration of device 100 and as described with respect to Figs. 2 and 3 further below, the object list may be stored only until the objects therein are analyzed by data processing unit 101, or may be stored for longer periods of time, e.g. until read out.

Device 100 further interfaces the 2D image acquisition unit 105. Unit 105 can be implemented as a CCD or CMOS camera capturing two dimensional (2D) images of the surroundings of the vehicle. The 2D camera 105 and the 3D camera 111can be arranged on vehicle 150 so that their respective fields of view overlap. While 3D camera 111 acquires distance images in a generally relatively low resolution, 2D camera 105 can acquire high resolution monochrome or colour images. 2D camera 105 can be configured to operate at frame rates ranging between 1 and 30 Hz, or even lower. Data processing unit 101 stores the images captured by 2D camera 105 in memory 102 in association with a time stamp which is obtained from system clock 152. Accordingly, the stored 2D images can be related to the object data in the object list having the same time stamp. This is particularly useful for the later reconstruction of a traffic situation after an accident.

Device 100 further interfaces the telemetry unit 151. Telemetry unit 151 of Fig. 1 is a functional unit summarizing information sources which provide information on the current operating conditions of vehicle 150. Telemetry data that can be provided by telemetry unit 151 comprises data received from a velocity sensor, a steering angle sensor, a GPS position sensor, a wheel sensor, and acceleration sensor such as an inertial sensor, a brake sensor registering an application of the vehicle's brakes and the like. In particular, information that is useful for determining a current driving situation can be provided by telemetry unit 151. Device 100 accordingly has information available on the vehicle velocity and position, the direction into which it is steering and whether it is accelerating or braking. Data processing unit 101 stores the information received from telemetry unit 151 at least temporarily in memory 102, again with a time stamp from system clock 152 in order to relate the stored data to corresponding object data having the same time stamp in the object list.

Data processing unit 101 is now adapted to automatically identify predetermined driving situations from the object list and the telemetry data stored in memory 102.

As an example, the object list comprises a traffic sign on a particular road section. Data processing unit 101 can now identify the speed limit determined by the traffic sign and compare it with the current vehicle velocity. Data processing unit 101 can then automatically determine the exceeding of the speed limit by vehicle 150 as a driving situation, and store the occurrence of this driving situation in memory 102. As another example the object list may comprise a solid line as an object which separates two lanes of a road section. Data processing unit 101 can now identify the position of this object within the fields of view from the object data. If the 3D camera 111 is aimed straight forward and if the solid line object moves from the left part of the field of view to the right part, data processing unit 101 can determine that the vehicle has crossed the solid line. The occurrence of this identified traffic situation is again logged in memory 102. Other driving situations that can be identified automatically by data processing unit 101 comprise the vehicle 150 passing another vehicle in a no-passing area, the vehicle 150 falling short of a minimum distance required to be kept to a vehicle travelling ahead, the vehicle 150 entering a one-way street in the wrong direction and an accident of the vehicle 150 or of another vehicle. Other driving situations are certainly conceivable and are identifiable by data processing unit 101. Besides the object data and the telemetry data, the identification may make use of the 2D images captured by the 2D camera 105. Possible examples include the identification of the information content of traffic signs, improvement of the identification whether a center line or other pavement markings are crossed, and the like. Similarly, data from sensors other than the velocity sensor may be used to improve the driving situation identification, such as using the vehicle steering angle to determine whether a solid line was crossed, or using GPS position information to determine whether a road was entered the wrong way.

The identified driving situations are stored in memory 102 and data processing unit 101 can determine a statistics of the logged situations, such as the total number of driving situations of a particular type or the frequency of occurrence of particular driving situations within a time period of e.g. one month or the like.

Device 100 further comprises interface 104 for giving out information stored in memory 102. Interface 104 can be any type of interface, such as a USB port, a Bluetooth interface, an Ethernet interface, a wireless local area network interface and the like. An evaluation device (not shown) can be connected to interface 104 and can retrieve the data from memory 102. As an example, the evaluation device may retrieve the object list, the telemetry data, the 2D images and/or the identified traffic events, possibly together with statistics determined by data processing unit 101. Depending on the configuration of device 100, the retrieved data can be used for a range of purposes.

As a first example, device 100 can be used as a tachograph, and can report the telemetry data and the object list over longer periods of time without requiring large amounts of memory, as the recording of video sequences would. Device 100 can thus cost efficiently logg this type of data. After retrieving the logged data, questions such as "Did the driver cross a solid line when overtaking?" or "Where were the vehicles involved in a driving situation located?" can easily be answered. Further examples include the extraction of traffic limitations from the object list and the tracking of the driving behaviour of the vehicle's driver, as will be discussed further below with respect to Figs. 2-4.

Device 100 may comprise further interfaces or components, for example an interface to a navigation system or a navigation database for locating particular traffic situations on map data. The image acquisition unit 110 and/or the 2D camera 105 can be part of the device 100. Device 100 can be implemented as a computing unit and can as such be part of another electronic device of vehicle 150, such as of a general vehicle computing device, an infotainment system or the like. Device 100 may further interface a display unit of vehicle 150 for giving out information to the driver, such as the detection of a particular driving situation, statistics on detected driving situations or a reconstruction of a particular driving situation.

Fig. 2 shows a flow diagram of a method according to an embodiment of the invention that can be performed by image acquisition unit 110 and device 100 of Fig. 1. The explanations of features given with respect to Fig. 1 accordingly apply also to the method illustrated in Fig. 2. In step 201, image data is acquired by the 3D camera. In the image data, objects are identified and the distances of the objects from the vehicle are derived from the image data in step 202. An object list comprising the detected objects, distances and a corresponding time stamp is then compiled in step 203 and is provided on an interface of the image acquisition unit. After generation of the object list, the corresponding image data is discarded by image acquisition unit 110.

The object list is received and at least temporarily stored by device 100 on interface 103 (step 204). From the telemetry unit, telemetry data including vehicle velocity is acquired in step 205 and at least temporarily stored. Further, 2D image data of the vehicle surroundings is acquired in step 206, e.g. by 2D camera 105, and at least temporarily stored.

In step 207, the data processing unit analyzes the object list, the telemetry data and the 2D image data in order to identify predetermined driving situations. The identified driving situations are stored in the memory (step 208). The acquisition of the different types of data and the analysis thereof can be a continuous process which is automatically performed while the vehicle is driving. According to the method, detected driving situations are thus continuously logged in the memory.

In the process, the analyzed object data, telemetry data and 2D image data can be discarded (step 209). As the storing of the identified driving situations requires only small amounts of memory, they can be logged over prolonged periods of time, such as months or even years.

In step 210, a statistics of the stored driving situations is determined. The total number of particular situations, averages over predetermined time periods or changes to the frequency of detection of particular driving situations can be determined. In step 211, the logged driving situations and/or the statistics on these are provided on the interface 104. As mentioned above, they may also be provided directly to the driver of the vehicle on a display unit.

The logged driving situations can now be retrieved from the interface for different purposes. In particular, it becomes possible to monitor the driving behaviour of the driver of the vehicle. The number of times the driver has passed a vehicle in a no-overtaking zone, has exceeded a speed limit or has performed other traffic rule violations can be determined easily. If the driver has only a conditional driving licence, the obeyance of the traffic regulations may thus be monitored by the method described above. Due to the small amount of memory required for storing the determined driving situations, the driving behaviour may be tracked as long as required, e.g. over the duration of the provisional licence. Similarly, authorities such as the police can read out the driving situation data from the interface for determining whether the driver has committed any violations of traffic regulations. Such a read out can be performed in the context of general traffic checks. In other implementations, the object list may be kept and provided for read out, so as to enable a more differentiated view on the particular traffic situations.

It should be clear that among others, steps 209 and 210 can be optional. The recorded data may be kept and the evaluation thereof may be performed by a separate device receiving the recorded data.

Such an embodiment of the method is illustrated in the flow diagram of Fig. 3. The method of Fig. 3 can be performed instead of steps 207-211 of Fig. 2, or can be performed additionally.

In step 301, the object list, the telemetry data and the 2D image data stored in the memory are provided on the interface 104. The data may still be discarded as in step 209, yet only after a predetermined time period. As an example, data that is older than 15, 10 or 5 minutes is discarded, so that only recently acquired data is kept in the memory. In this embodiment, all types of recorded data are preferably provided with a time stamp, so that the object data, the telemetry data and the 2D image data can be related to each other.

In step 302, the provided data is retrieved by means of an evaluation device. By making use of the evaluation device, the retrieved object list, the telemetry data and the 2D image data is then analyzed in order to identify an accident and to reconstruct the traffic situation prevailing at the time the accident happened (step 303). As an example, from the object list, it can be determined which objects were located in which distances to the vehicle, and the telemetry data can give information about the current velocity and steering angle of the vehicle, while the 2D image data can be analyzed by means of pattern recognition or displayed to give a better overview over the actual driving situation. The reconstruction can be performed automatically by the evaluation device. The reconstruction result is provided to the user in step 304. It may for example comprise a graphical display of the traffic situation, e.g. comprising the locations of vehicles and other objects and their relative distances and velocities. A particular traffic incident, here an accident, can thus precisely be reconstructed. The method may further improve driving safety by enabling a detailed analysis of the situation and the performing of corresponding adaptations, e.g. to the vehicle or to traffic regulations.

Other embodiments are certainly conceivable. In the embodiment of Fig. 3, the analysis of the recorded data may for example be performed by device 100, with the reconstruction results being given out on a display provided in vehicle 150. On the other hand, the automatic determination of driving situations and their storing as described with respect to steps 207 and 208 of Fig. 2 may be performed in an evaluation device separate from vehicle 150. Such a device can retrieve the reported data on interface 104 as described with respect to Fig. 3. The object list may thus be recorded for prolonged periods of time in memory 102.

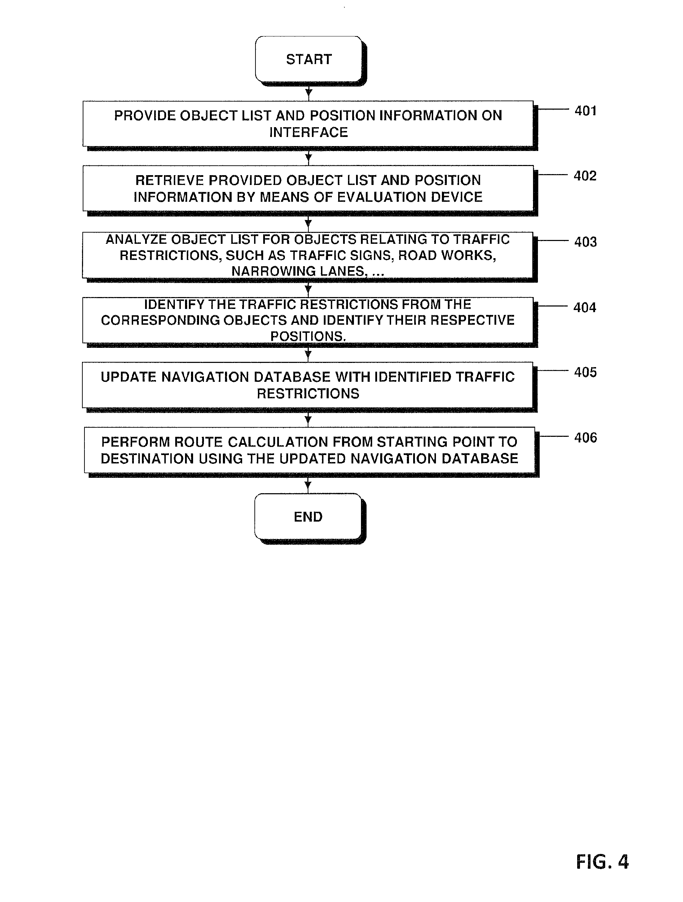

A further embodiment of a method according to the invention is illustrated in the flow diagram of Fig. 4. The method can again be performed in addition to steps 201-206 of Fig. 2, although the acquisition of 2D image data is optional. It can further be combined with the method of Fig. 2 and/or Fig. 3. In the embodiment of Fig. 4, the acquired telemetry data comprises the actual position of the vehicle 150. The object list and the acquired position information are provided on the interface 104 in step 401. Both types of data are again associated with a time stamp, so that they can be related to each other. The object list and the position information is retrieved by means of an evaluation device in step 402. The retrieved object list is analyzed for objects relating to traffic restrictions, such as traffic signs, road works, narrowing lanes, and the like (step 403). In particular when the object list comprises an identifier for the type of object, the identifier can be used to extract the objects relating to traffic restrictions. Other possibilities include the recognition of the shape of the object or the like.

The traffic restrictions to which the extracted objects relate are identified in step 404. As the objects comprise the time stamp indicating the time at which the image was acquired, in which the respective object is detected, the position at which the image was acquired and thus of the object identified can be determined from the retrieved position information by means of the time stamp. If the time stamps of object and position data do not exactly match, the position data having the time stamp closest to the time stamp of the object data can be used. Accordingly, the type of the traffic restriction and its location can be precisely identified in step 404.

A navigation database is updated in step 405 with the identified traffic restrictions. The navigation database can thus be kept up to date, even without making use of a service such as TMC and also with respect to traffic restrictions that are not conveyed by such a service.

Using the updated navigation data base, a route calculation from a starting point to a destination is then performed in step 406. If the speed limit for a particular road segment was decreased, this is now considered in the updated navigation database, so that the fastest route to the destination can still be provided. Blocked roads, changes to speed limits, the narrowing of lanes due to road works and other traffic restrictions can thus efficiently be considered in the route determination.

In some embodiments, the navigation database is part of a navigation system of vehicle 150, and the method of Fig. 4 may be performed by device 100 automatically (without steps 401 and 402). In other embodiments, the navigation database is stored on a server accessible via a network. The database may then be updated with traffic restrictions detected in the object data of a plurality of vehicles, so that it becomes possible to update the database for a large traffic area. The traffic restrictions and their positions may be transmitted over the network to the server, or the server itself may perform the evaluation of the object list as described with respect to Fig. 4. Other implementations are certainly conceivable.

As can be seen from the above, the present invention provides several methods of analyzing the object list provided by the image acquisition unit. The analysis can be performed automatically and can identify driving situations, perform a detailed reconstruction of a particular driving situation or extract traffic restrictions from the object list. Besides monitoring the driving behaviour over longer periods of time, the positioning of objects in a traffic situation and their dynamics can be reconstructed and navigation databases can be updated and improved.

## Claims

1. A method of identifying a driving situation involving a vehicle (150) which is provided with an image acquisition unit (110), the method comprising the steps of:
- receiving, from said image acquisition unit (110), an object list comprising object data, the object data including at least
a plurality of objects detected by means of said image acquisition unit (110) in image data that is acquired of the surroundings of the vehicle (150) by said image acquisition unit (110), and
distances of the detected objects to the vehicle (150) determined by said image acquisition unit (110) from the acquired image data,
- at least temporarily storing the object list in a memory (102) arranged in said vehicle (150); and
- analyzing the object list so as to identify one or more predetermined driving situations from the object data comprised in the object list.

2. The method according to claim 1, further comprising the steps of acquiring telemetry data from the vehicle (150) while driving and at least temporarily storing the acquired telemetry data in said memory (102) in such a way that it is temporally related to the object data stored in the object list, the telemetry data being considered in the identification of said driving situation.

3. The method according to any of the preceding claims, wherein the image acquisition unit comprises a 3D camera (111), the method further comprising the steps of acquiring a stream of 2D images with a second image acquisition unit (105) and at least temporarily storing the 2D images in said memory (102), the stored 2D images being considered in the identification of said driving situation.

4. The method according to any of the preceding claims, wherein the temporary storing of the object list is performed such that object data that is older than a predetermined time period is continuously being discarded from the object list while the vehicle (150) is in motion.

5. The method according to any of the preceding claims, wherein the object list comprises at least other vehicles, traffic signs and/or pavement markings as objects which are detected by said image acquisition unit (110).

6. The method according to any of the preceding claims, wherein the analyzing of the object list comprises at least
comparing information content derived from an object of the list to telemetry data of the vehicle (150) or
determining a type of an object and a relative movement of the object and the vehicle (150)
in order to identify the driving situation.

7. The method according to any of the preceding claims, wherein the analyzing of the object list is automatically performed such that at least one or a combination of the following driving situations can be identified:
- the vehicle exceeding a speed limit set on a particular road section;
- the vehicle crossing a solid line separating lanes of a road section;
- the vehicle passing another vehicle in a no passing area;
- the vehicle falling short of a minimum distance required to be kept to a vehicle travelling ahead;
- the vehicle entering a one way street in the wrong direction;
- an accident of the vehicle or of another vehicle.

8. The method according to any of the preceding claims, wherein the method further comprises recording the identified driving situations in said memory (102).

9. The method according to claim 8, further comprising the step of providing the recorded driving situations for readout, the driving situation data being provided as a basis for determining the driving behaviour of the driver of the vehicle (150).

10. The method according to any of the preceding claims, wherein the method is continuously performed while the vehicle (150) is driving, said analyzing of the object list being performed automatically for the majority of the driving situations, preferably for all driving situations, by means of a data processing unit (101) arranged in said vehicle (150).

11. The method according to any of the preceding claims, wherein driving situation comprises an accident, and wherein said analyzing of the object list comprises an analysis being performed outside the vehicle, said analysis comprising the retrieving of said object list from said memory and the reconstruction of the vehicle position relative to one or more objects of the object list in order to reconstruct the accident.

12. A method of providing trafficability information for road sections, the method comprising the steps of
- providing an object list, the object list comprising a plurality of objects detected by means of an image acquisition unit (110) mounted to a vehicle (150) and adapted to process image data acquired while the vehicle (150) is in motion so as to detect said objects in said image data, the objects in the object list comprising at least other vehicles, traffic signs and pavement markings,
- providing position information that relates the acquired image data and accordingly the objects detected therein to the position at which the image data was acquired,
- automatically extracting objects relating to traffic restrictions from said object list,
- identifying the traffic restrictions indicated by the extracted objects and their respective positions, and
- providing the identified traffic restrictions together with the respective position information to be included into a navigation database so as to enable the consideration of the traffic restrictions in a subsequent route determination.

13. Device (100) for identifying driving situations involving a vehicle (150), the device (100) being adapted to be mounted inside the vehicle (150) comprising an image acquisition unit (110), the device (100) comprising:
- an interface (103) towards said image acquisition unit (110), the device being configured to receive an object list comprising object data on said interface (103), the object data including at least a plurality of objects detected by means of said image acquisition unit (110) in image data that is acquired of the surroundings of the vehicle (150) by said image acquisition unit (110), and distances of the detected objects to the vehicle (150) determined by said image acquisition unit (110) from the acquired image data,
- a memory (102) configured to store said object list at least temporarily, and
- a data processing unit (101) configured to process the object list received on said interface (103) and stored in said memory (102) by analyzing the object list so as to identify one or more predetermined driving situations from the object data comprised in the object list.

14. The device according to claim 13, wherein the device is configured so as to perform the method according to one of claims 2-12.

15. A computer program product that can be loaded into the internal memory of a computing device, said product comprising software code portions for performing the method of one of claims 1-12 when the product is executed.
